Europäisches Patentamt

(19) European Patent Office    (11) Publication number:    0 184 560

Office européen des brevets                          A1

(12) EUROPEAN PATENT APPLICATION

(21) Application number: 85830268.0          (51) Int. Cl.⁴: F 04 D 29/12
                                                    F 16 J 15/38
(22) Date of filing: 28.10.85

(30) Priority: 07.11.84 IT 5401184 U

(43) Date of publication of application:
11.06.86 Bulletin 86/24

(84) Designated Contracting States:
DE FR GB IT SE

(71) Applicant: GALLINO GOMMA S.p.A.
Via Torino 178
I-10097 Regina Margherita (Torino)(IT)

(72) Inventor: Gambino, Giuseppino
Via Le Chiuse 56
I-10144 Torino(IT)

(72) Inventor: Genevro, Gianfranco
Viale Dante Di Nanni 11
I-10098 Rivoli (Torino)(IT)

(74) Representative: Notaro, Giancarlo et al,
c/o Jacobacci-Casetta & Perani S.p.A. Via Alfieri, 17
I-10121 Torino(IT)

(54) Frontal sliding seal, particularly for pumps for circulating the coolant of internal combustion engines.

㊄ A frontal sliding seal comprises an annular cylindrical housing (8) having an open end and an annular base (9) at the opposite end, a rigid frontal sliding sealing ring (12) mounted for axial sliding movement within the housing (8) and prevented from rotating relative thereto, a helical spring (16) interposed between the base (9) of the housing (8) and the rigid sealing ring (12), which urges the rigid ring (12) against stop means (17) provided adjacent the open end of the housing (8), and lateral sealing means between the rigid ring (12) and the side wall of the housing (8).

These lateral sealing means comprise an elastomeric sealing ring (18) including a central part (19) located between the helical spring (16) and the rigid sealing ring (12), and a peripheral sealing lip (20) in contact with the side wall of the housing (8).

FIG. 3

Frontal sliding seal, particularly for pumps for circulating the coolant of internal combustion engines.

The present invention relates to a frontal sliding seal, particularly for pumps for circulating the coolant of internal combustion engines, of the type comprising an annular cylindrical housing having an open end and an annular base at the opposite end, a rigid frontal sliding sealing ring mounted for axial sliding movement within the housing and prevented from rotating relative thereto, a helical spring interposed between the base of the housing and the rigid sealing ring , which urges the rigid ring against stop means provided adjacent the open end of the housing , and lateral sealing means between the rigid ring and the side wall of the housing.

A seal of the type specified above is described and illustrated, for example, in Italian Patent Application No. 19423-A/82 of 2nd February 1982. In the seal illustrated in this application, the rigid frontal sliding sealing ring includes a cylindrical portion which extends axially away from the end of the ring bearing the frontal sliding surface and the lateral sealing means are constituted by a rubber sealing ring, of the type commonly called an "O-ring", interposed between the lateral outer surface of the cylindrical appendage of the rigid sealing ring and the lateral surface of the housing of the seal. This known seal is able to solve the sealing problem satisfactorily but requires relatively involved and expensive operations for the manufacture of the rigid sealing ring because of the relatively complicated form of the latter.

The object of the present invention is to provide a frontal sliding seal which can avoid the disadvantage mentioned above.

According to the main characteristic of the invention, the lateral sealing means include an elastomeric sealing ring including a central part interposed between the helical spring and the rigid sealing ring, and a peripheral sealing lip in contact with the side wall of the housing.

The central part of the elastomeric sealing ring is stiffened by means of a metal ring embedded therein and has a substantially L-shaped cross-section. The peripheral lip, however, has a substantially circular cross-section.

By virtue of this arrangement, the configuration of the frontal sliding sealing ring is considerably simplified compared to the prior art solution mentioned above, to the advantage of the ease and cheapness of manufacture.

The present invention will now be described with reference to the appended drawings, provided purely by way of non-limiting example, in which:

Figure 1 is a section of a seal according to the invention,

Figure 2 is a front view of the seal of Figure 1, and

Figure 3 is a partially sectioned view of the seal of Figure 1 on an enlarged scale, in its assembled condition.

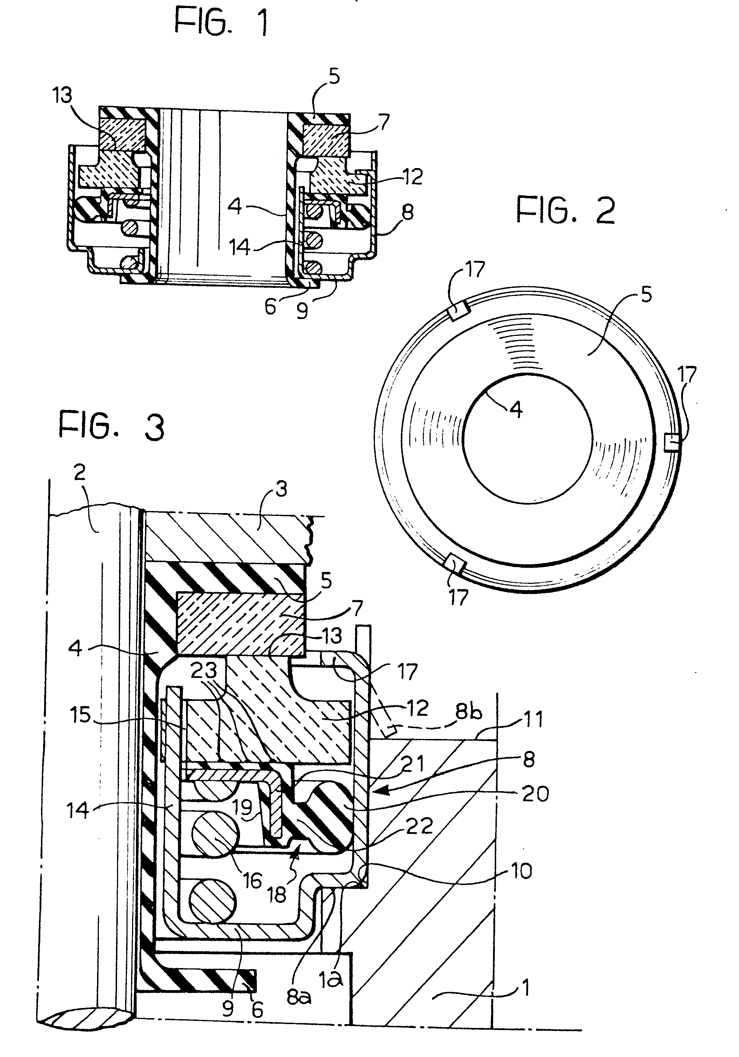

With reference to Figure 3, a portion of the body of a pump for circulating the coolant of an internal combustion engine is indicated 1. Within the body 1 is rotatably mounted a shaft 2 on which is fixed the rotor of the pump, the hub of which is partially illustrated in Figure 3 and is indicated 3.

A tubular rubber sleeve 4 is fitted onto the shaft 2 with interference and has two annular end flanges 5, 6. The annular flange 5 is in contact with the hub 3 of the rotor. A ring 7 of ceramic material is fitted with interference onto the cylindrical part of the sleeve 4 adjacent the flange 5. The tubular rubber sleeve 4 and the ring 7 rotate with the shaft 2 and the rotor 3 of the pump.

With reference to Figures 1 and 2, moreover, the seal according to the invention includes a cylindrical annular housing 8. The housing 8 is made from metal and has an open end and an annular base 9 at the opposite end. The housing 8 is mounted with interference in a seat 10 formed in the body 1 of the pump. In the embodiment illustrated, the housing 8 has an annular abutment surface 8a in contact with a corresponding annular abutment surface 1a of the seat formed in the body of the pump. In one variant, which relates to the case in which the seat for the housing 8 does not have the annular abutment surface 1a, the housing 8 is provided with tabs 8b (one of which is illustrated in broken outline in Figure 3) formed by blanking and folding of the side wall of the housing 8 and arranged to engage a frontal surface 11 of the body of the pump.

The seal according to the invention includes a rigid frontal sliding sealing ring 12 made, for example, from graphite or a rigid graphite-based composition. The rigid sealing ring 12 is axially slidable within the housing 8 and has a frontal sliding sealing surface 13 in contact with the ring 7.

The base 9 of the housing 8 has an appendage 14 which extends axially from the inner edge of the base 9 and is engaged in a groove 15 formed in the inner surface of the rigid sealing ring 12 so as to prevent rotation of the ring 12 relative to the housing 8. Between the base 9 of the housing 8 and the rigid sealing ring 12 is a helical spring 16 which biasses the rigid sealing ring 12 into engagement with the ceramic ring 7. Figure 3 illustrates the device in the assembled condition. In the disassembled condition (illustrated in Figure 1) the spring 16 keeps the rigid sealing ring 7 against stop means provided adjacent the open end of the housing 8 and constituted by tabs 17 projecting radially inwardly and formed by blanking and folding of the side wall of the housing 8 (see also Figure 2).

In order to ensure sealing between the rigid ring 12 and the side wall of the housing 8, a sealing ring 18 of elastomeric material is provided, which has a central part 19 interposed between the helical spring 16 and the rigid sealing ring 12 and a peripheral lip 20 in contact with the side wall of the housing 8. The central part 19 of the ring 18 has a substantially L-shaped cross-section and is stiffened by a metal ring 21, also of L-shaped cross-section, embedded in this central part 19. The peripheral lip 20 has a circular section and is joined to the central part 19 of the ring 18 by an annular portion 22 of a thickness less than the thickness of the peripheral lip 20.

The surface of the central part 19 of the ring 18 facing the rigid sealing ring 12 has a series of annular ridges 23 which tend to increase the friction between the contact surfaces.

Naturally, the principle of the invention remaining the same, the constructional details may be varied widely with respect to those described purely by way of example.

CLAIMS

1.    Frontal sliding seal comprising:

an annular cylindrical housing (8) having an open end and an annular base (9) at the opposite end,

a rigid frontal sliding sealing ring (12) mounted for axial sliding movement within the housing (8) and prevented from rotating relative thereto,

a helical spring (16) interposed between the base (9) of the housing (8) and the rigid sealing ring (12), which urges the rigid ring (12) against stop means (17) provided adjacent the open end of the housing (8), and

lateral sealing means between the rigid ring (12) and the side wall of the housing (8),

characterised in that the lateral sealing means comprise an elastomeric sealing ring (18) including a central part (19) interposed between the helical spring (16) and the rigid sealing ring (12), and a peripheral sealing lip (20) in contact with the side wall of the housing (8).

2.    Seal according to Claim 1, characterised in that the central part (19) of the elastomeric sealing ring (18) is stiffened by means of a metal ring (21) embedded in this central part.

3.    Seal according to Claim 2, characterised in that the central part (19) has a substantially L-shaped cross-section.

4.    Seal according to Claim 3, characterised in that the peripheral lip (20) has a circular cross section.

5.    Seal according to Claim 4, characterised in that the peripheral lip (20) is connected to the central part (19) by means of an annular portion (22) having a thickness less than the thickness of the peripheral lip (20).

6. Seal according to Claim 5, characterised in that the surface of the central part (19) which is in contact with the rigid sealing ring (12) has a series of annular projections (23).

1/1                    0184560

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 127 183 (TALAMONTI) * Column 1, line 61 - column 3, line 32; figures 1-4 * | 1 | F 04 D   29/12 F 16 J   15/38 |
| Y |  | 2 |  |
| Y | US-A-2 316 059 (FRETTER) * Page 2, right-hand column, lines 6-55; figures 8-11 * | 1,3 |  |
| Y | US-A-3 061 319 (SNYDER) * Column 3, lines 9-27; column 3, line 62 - column 4, line 12; figure 1 * | 1,3,5 |  |
| Y | FR-A-1 603 359 (GOETZEWERKE FREID. GOETZE) * Page 3, lines 6-27; figures 1,2,4 * | 2,3,4 | TECHNICAL FIELDS SEARCHED (Int Cl 4) |
| Y | US-A-2 288 164 (KATCHER) * Page 1, right-hand column, lines 3-36; figures * | 4,5 | F 04 D F 16 J |
| Y | US-A-2 702 203 (SEFREN) * Column 1, line 65 - column 2, line 50; figures 1-3 * | 1-3,6 |  |
|  | --- -/- |  |  |

The present search report has been drawn up for all claims

| Place of search | Date of completion of the search | Examiner |
|---|---|---|
| THE HAGUE | 06-02-1986 | KAPOULAS T. |

European Patent Office

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl 4) |
|---|---|---|---|
| Y | FR-A-2 115 777 (GALLINO & CO.) <br> * Page 2, lines 11-27,37 - page 3, line 15; page 4, lines 9-12; figures * | 2,6 | |
| | ----- | | |

TECHNICAL FIELDS SEARCHED (Int Cl 4)

The present search report has been drawn up for all claims

| Place of search | Date of completion of the search | Examiner |
|---|---|---|
| THE HAGUE | 06-02-1986 | KAPOULAS T. |